# EUROPÄISCHE PATENTANMELDUNG

(11) **EP 4 733 557 A1**
(43) Veröffentlichungstag der Anmeldung: **29.04.2026**
(21) Anmeldenummer: 24020324.0
(22) Anmeldetag: 28.10.2024
(51) Int. Cl.: F02C 3/20, C01B 3/04, F02C 3/22

(54) **VERFAHREN UND VORRICHTUNG ZUR ERZEUGUNG VON ELEKTRISCHER REGELENERGIE**

(71) Anmelder: Linde GmbH, 82049 Pullach (DE)
(72) Erfinder: Bohn, Jan-Peter, 82049 Pullach (DE); Reinke, Michael, 82049 Pullach (DE)
(74) Vertreter: Fischer, Werner

(57) **Zusammenfassung**

Die Erfindung betrifft ein Verfahren sowie eine Vorrichtung zur Erzeugung elektrischer Regelenergie (8) für ein Stromnetz, wobei ein Brennstoff (7) in einer Gasturbine (T) verbrannt wird, die einen mit dem Stromnetz verbundenen elektrischen Generator (G) antreibt, der die Regelenergie (8) bereitstellt. Kennzeichnend hierbei ist, dass Ammoniak (1) mit katalytischer Unterstützung thermisch gespalten wird, um ein Wasserstoff und Stickstoff umfassendes Spaltgas (4) zu gewinnen, von dem zumindest ein Teil (7) im Bedarfsfall der Gasturbine (T) als Brennstoff zugeführt wird, wobei zum Betrieb der Gasturbine (T) nicht benötigtes Spaltgas (9) weiter zu einem Wasserstoffprodukt (10) aufbereitet wird.

## Beschreibung

Die Erfindung betrifft ein Verfahren zur Erzeugung elektrischer Regelenergie für ein Stromnetz, wobei Ammoniak in Wasserstoff und Stickstoff gespalten wird, um Brennstoff für eine Gasturbine zu erhalten, die einen mit dem Stromnetz verbundenen elektrischen Generator antreibt, der die Regelenergie bereitstellt.

Weiterhin betrifft die Erfindung eine Vorrichtung zur Durchführung des erfindungsgemäßen Verfahrens.

Bei der Erzeugung elektrischer Energie für ein Stromnetz, das eine Vielzahl von Stromverbrauchern mit einem oder mehreren Stromanbietern verbindet, ist stets darauf zu achten, dass sich Stromangebot und Stromnachfrage die Waage halten, da es andernfalls zu Spannungs- und Frequenzschwankungen oder sogar zu einem Ausfall des Stromnetzes kommen kann. Grundsätzlich ist die Stromnachfrage der Verbraucher in einem öffentlichen Stromnetz zeitlich nicht konstant. Beispielsweise ist sie während des Tages ca. dreimal so groß wie in der Nacht. Auch an Werktagen ist sie höher als an Wochenenden und im Winter ist sie höher als im Sommer. Seitens der Stromanbieter wird durch das Zu- und Abschalten bzw. das Herauf- und Herunterregeln von Kraftwerksleistung versucht, die Unterschiede zwischen Stromangebot und -nachfrage auszugleichen. Für Grundlastkraftwerke wie Kohlekraftwerke ist dies jedoch einerseits uneffektiv, da deren Wirkungsgrade im Teillastbetrieb drastisch absinken, und andererseits aufgrund der thermischen Trägheit umso schwieriger, je schneller und überraschender sich solche Unterschiede einstellen. Der verstärkte Einsatz erneuerbarer Energien zur Stromerzeugung wird diese Problematik in Zukunft noch verschärfen, da insbesondere Sonne und Wind zeitlich nicht konstant verfügbar sind und ihre Verfügbarkeit darüber hinaus nur bedingt langfristig vorhersagbar ist.

Stromdefizite werden mit sog. Regelenergie ausgeglichen, die über Spitzenlastkraftwerke wie Gas- bzw. Gas-und-Dampf-Kraftwerke (GuD-Kraftwerke) zur Verfügung gestellt wird, in denen eine Gasturbine allein oder zusammen mit einer nachgeschalteten Dampfturbine einen elektrischen Generator antreibt. Wegen ihrer sehr kurzen Startzeiten und der hohen elektrischen Wirkungsgrade, die über 50% liegen können, eigenen sich Gas- und GuD-Kraftwerke besonders gut für einen solchen Einsatz.

Sowohl Gas- als auch GuD-Kraftwerke werden gewöhnlich mit Erdgas befeuert, so dass bei ihrem Betrieb Kohlendioxid entsteht, das mit großem Aufwand durch Sequestrierung entsorgt werden muss, wenn es nicht mit negativen Folgen für das Klima in die Atmosphäre freigesetzt werden soll. Die Kohlendioxidproblematik könnte entschärft werden, wenn statt Erdgas grünes bzw. blaues, d.h. ohne Freisetzung von Kohledioxid erzeugtes Ammoniak als Brennstoff eingesetzt wird. Aufgrund seiner Giftigkeit, der geringen Flammengeschwindigkeit, der Bildung von Stickoxiden und der hohen Anforderungen an das Turbinenmaterial, ist die Verwendung von reinem Ammoniak jedoch sehr problematisch.

Um diese Problematik zu umgehen, schlägt die EP4372218A1 vor, Ammoniak mit katalytischer Unterstützung thermisch in Wasserstoff und Stickstoff zu spalten, das so erhaltene Spaltgas mit beträchtlichem Aufwand in eine Wasserstoff- und eine Stickstofffraktion zu trennen und entweder die Wasserstofffraktion allein oder gemeinsam mit der Stickstofffraktion, die auch nicht umgesetztes Ammoniak enthalten kann, einer Gasturbine als Brennstoff zuzuführen.

Aufgabe der vorliegenden Erfindung ist es, ein Verfahren und eine Vorrichtung der gattungsgemäßen Art anzugeben, die es erlauben, die Nachteile des Standes der Technik zu überwinden.

Die gestellte Aufgabe wird verfahrensseitig erfindungsgemäß dadurch gelöst, dass Ammoniak mit katalytischer Unterstützung thermisch gespalten wird, um ein Wasserstoff und Stickstoff umfassendes Spaltgas zu gewinnen, von dem zumindest ein Teil im Bedarfsfall der Gasturbine als Brennstoff zugeführt wird, wobei zum Betrieb der Gasturbine nicht benötigtes Spaltgas weiter zu einem Wasserstoffprodukt aufbereitet wird.

Der Bedarfsfall tritt dann ein, wenn Regelenergie für das Stromnetz benötigt wird und eine anderer zum Betrieb der Gasturbine geeigneter Brennstoff nicht oder in nicht ausreichender Menge zur Verfügung steht oder nicht verwendet werden soll. Vorzugsweise wird das Spaltgas in einer Menge gebildet, die ausreichend groß ist, um den maximalen Brennstoffbedarf der Gasturbine zu decken, so dass die Gasturbine auch bei Volllast allein mit Spaltgas als Brennstoff betrieben werden kann.

Die Spaltung von Ammoniak ist bekannt und seit vielen Jahren Stand der Technik. Die dabei mit katalytischer Unterstützung ablaufende Reaktion

2NH₃ ↔ N₂ + 3H₂

ist endotherm (ΔH=46,2kJ/mol). Die Lage des Gleichgewichts und die Reaktionsgeschwindigkeit hängen stark von Spaltdruck und -temperatur sowie von der Art des eingesetzten Katalysators ab, so dass das erhaltene Spaltgas neben Wasserstoff und Stickstoff auch nicht umgesetztes Ammoniak enthält. Darüber hinaus kann das Spaltgas auch Wasser aufweisen, das in sog. technischem Ammoniak, wie es gewöhnlich zur industriellen Ammoniakspaltung eingesetzt wird, mit einem Gewichtsanteil von bis zu 5000ppm vorliegt und das nicht an der Spaltreaktion teilnimmt.

Damit der erzeugte, im Spaltgas enthaltene Wasserstoff ohne oder mit nur geringem Verdichtungsaufwand als Produkt abgegeben werden kann, wird die Ammoniakspaltung zweckmäßigerweise bei Drücken zwischen 10 und 40 bar durchgeführt. Dies ist umso einfacher möglich, als Ammoniak gewöhnlich flüssig für die Spaltung bereitgestellt wird, so dass sein Druck mit geringem Energieaufwand mittels Pumpe erhöht werden kann. Damit unter diesen Bedingungen ein ausreichend hoher, wirtschaftlich sinnvoller Umsetzungsgrad des eingesetzten Ammoniaks erreicht wird, ist es notwendig, die Spaltung bei Temperaturen zwischen 500 und 1000°C zu betreiben.

Wegen seiner hohen Anteile an Wasserstoff und Stickstoff, der als Temperaturmoderator dient und den Massenstrom erhöht, eignet sich das Spaltgas zum Einsatz als Brennstoff in einer marktüblichen, für den Betrieb mit Erdgas ausgelegten Gasturbine, mit deren Hilfe die Regelenergie ohne Freisetzung von Kohlendioxid in die Atmosphäre erzeugt werden kann, falls es sich bei dem zur Spaltung eingesetzten Ammoniak um grünes Ammoniak handelt.

Zur Spaltung von Ammoniak können elektrisch beheizte Spaltreaktoren eingesetzt werden, was insbesondere für industrielle Anwendungen mit vergleichsweise geringem Wasserstoffbedarf von weniger als 1000 mₙ³/h, wie beispielsweise für die Wärmebehandlung von Metallen, wirtschaftlich vorteilhaft ist. Prinzipiell kann das Wasserstoff und Stickstoff enthaltende Spaltgas hierbei ohne Freisetzung von Kohlendioxid zur Verfügung gestellt werden, wenn der benötigte Strom aus regenerativen Quellen bezogen wird.

Mit höheren Raten kann Ammoniak unter Einsatz ähnlicher Reaktoren gespalten werden, wie sie heute bei der großtechnischen Synthesegaserzeugung durch die Dampfreformierung von Kohlenwasserstoffen Verwendung finden. Derartige Anlagen umfassen einen Spaltreaktor mit einem Feuerraum, in dem mit Katalysatormaterial gefüllte Spaltrohre angeordnet sind, sowie ein Abhitzesystem. Der Feuerraum wird durch einen oder mehrere Brenner beheizt, die Energie für die endotherm ablaufende Spaltung des durch die Spaltrohre geführten Ammoniaks liefern.

Stromaufwärts eines allothermen, elektrisch oder über Brenner beheizbaren Spaltreaktors kann ein adiabat betreibbarer Vorspaltreaktor angeordnet sein, der ausschließlich die Energie des ihm zugeführten Einsatzes zur Spaltung eines großen Teils des enthaltenen Ammoniaks nutzt. Der Gehalt an nicht umgesetztem Ammoniak liegt in dem dabei erhaltenen Spaltgas (Vorspaltgas) deutlich höher als in dem Spaltgas (Vollspaltgas), das in dem nachfolgenden allothermen Spaltreaktor erhalten wird.

Vorteilhafterweise ist es nicht erforderlich, das Spaltgas, bei dem es sich um eine Vor- oder ein Vollspaltgas handeln kann, durch die Abtrennung von Komponenten zum Brennstoff für die Gasturbine aufzubereiten. Allerding kann es notwendig sein, zumindest den als Brennstoff vorgesehenen Teil des Spaltgas abzukühlen, damit es die zulässige Eintrittstemperatur der Gasturbine, die typischerweise bei ca. 350°C liegt, nicht überschreitet. Zweckmäßigerweise wird der Druck des Spaltgases auf dem Weg zur Gasturbine aktiv, d.h. nicht weiter als durch unvermeidliche Leitungsverluste bedingt abgesenkt, da neben der chemischen auch die Druckenergie des im Brennstoff enthaltenen Stickstoffs in Regelenergie umsetzbar ist.

Eine bevorzugte Ausgestaltung des erfindungsgemäßen Verfahrens sieht vor, die Ammoniakspaltung in einem einzigen Spaltschritt durchzuführen und von dem dabei erhaltenen Spaltgas (Vollspaltgas) zumindest einen Teil im Bedarfsfall der Gasturbine als Brennstoff zuzuführen. Nicht zum Betrieb der Gasturbine benötigtes Vollspaltgas wird durch die Abtrennung von Stickstoff, Ammoniak und ggf. Wasser zu einem Wasserstoffprodukt aufbereitet, das an der Anlagengrenze gegen Gutschrift abgegeben werden kann.

In einer anderen Ausgestaltung des erfindungsgemäßen Verfahrens wird die Ammoniakspaltung in einem bevorzugt adiabat ausgeführten Vor- und einem sich an diesen anschließenden Hauptspaltschritt durchgeführt, wobei zumindest ein Teil des im Vorspaltschritt erhaltenen Spaltgases (Vorspaltgas) und/oder wenigstens ein Teil des im Hauptspaltschritt erhaltenen Vollspaltgases im Bedarfsfall der Gasturbine als Brennstoff zugeführt wird. Wird ein Teil des Vorspaltgases der Gasturbine zugeführt, ist vorgesehen, den verbleibenden Rest dieses Gases im Hauptspaltschritt weiterzubehandeln und zumindest einen Teil des so erhaltenen Vollspaltgases durch die Abtrennung von Stickstoff, Ammoniak und ggf. Wasser zu einem Wasserstoffprodukt aufzubereiten.

Die erfindungsgemäße Verwendung von nicht für die Erzeugung von Regelenergie benötigtem Spaltgas zur Herstellung eines Wasserstoffprodukts erlaubt es, einen zeitlich konstanten Ammoniakmengenstrom zu spalten, so dass die gesamte Ammoniakspaltung, zumindest aber ein Vorspaltschritt, unabhängig von der für die Gasturbine benötigten Brennstoffmenge stets unter optimalen Betriebsbedingungen durchgeführt werden kann.

Um Spaltgas ggf. auf die Eintrittstemperatur der Gasturbine abzukühlen, wird es vorzugsweise zur Verdampfung und/oder Überhitzung des flüssig bereitgestellten Ammoniakeinsatzes verwendet. Auf eine Abkühlung kann verzichtet werden, wenn das als Brennstoff für die Gasturbine vorgesehene Spaltgas in einem adiabat durchgeführten Vorspaltschritt bereits mit einer für den Eintritt in die Gasturbine geeigneten Temperatur erhalten wird.

Wenn das in einem Vorspaltschritt erhaltene Vorspaltgas ganz oder teilweise der Gasturbine zugeführt wird, kann es sein, dass im Hauptspaltschritt nicht genügend heißes Spaltgas für eine vollständige Verdampfung bzw. Überhitzung des Ammoniakeinsatzes erhalten wird. Insbesondere dann kann es sinnvoll sein, das in der Gasturbine erhaltene Abgas zurückzuführen und gegen zu verdampfenden und/oder zu überhitzenden Ammoniakeinsatz abzukühlen.

Vorzugsweise werden Stickstoff, Ammoniak und ggf. Wasser von dem nicht für die Gasturbine benötigten Vollspaltgas durch Druckwechseladsorption abgetrennt, wobei neben dem Wasserstoffprodukt ein Wasserstoff, Ammoniak und ggf. Wasser enthaltendes Restgas anfällt, das zweckmäßigerweise verbrannt wird, um für die Ammoniakspaltung benötigte Wärme zu erzeugen. Möglich ist es auch, zumindest einen Teil des Restgases zu exportieren oder in einer Fackel zu entsorgen.

Falls die durch Druckwechseladsorption erhältliche Restgasmenge zu gering ist, um den Wärmebedarf der Ammoniakspaltung zu decken, ist vorgesehen, einen Teil des Vollspaltgases stromaufwärts der Druckwechseladsorption abzuzweigen und zum Erhalt von Wärme für die Ammoniakspaltung zu verbrennen.

Die ebenfalls von der Erfindung umfasste Vorrichtung zur Erzeugung elektrischer Regelenergie für ein Stromnetz, weist eine Gasturbine auf, die mit einem Generator gekoppelt und über diesen mit dem Stromnetz verbindbar ist, sowie eine Brennstoffzuführung, über die der Gasturbine ein für ihren Betrieb benötigter Brennstoff zugeführt werden kann.

Seitens der Vorrichtung wird die gestellte Aufgabe erfindungsgemäß dadurch gelöst, dass sie eine mit der Gasturbine sowie einer Trenneinrichtung verbundene Spalteirichtung aufweist, in der Ammoniak mit katalytischer Unterstützung thermisch gespalten werden kann, um ein Wasserstoff und Stickstoff umfassendes Spaltgas zu gewinnen, von dem zumindest ein Teil im Bedarfsfall der Gasturbine über die Brennstoffzuführung als Brennstoff zuführbar ist, während zum Betrieb der Gasturbine nicht benötigtes Spaltgas zu einem Einsatzgas aufbereitet werden kann, von dem in der Trenneinrichtung ein Wasserstoffprodukt abtrennbar ist.

In einer Ausgestaltung weist die Spalteinrichtung der erfindungsgemäßen Vorrichtung genau einen Spaltreaktor auf, der austrittseitig über die Brennstoffzuführung mit der Gasturbine verbunden ist, so dass im Spaltreaktor erhältliches Spaltgas über die Brennstoffzuführung der Gasturbine zugeführt werden kann.

In einer anderen Ausgestaltung weist die Spalteinrichtung der erfindungsgemäßen Vorrichtung einen, bevorzugt für einen adiabaten Betrieb ausgelegten Vor- und einen diesem nachgeschalteten Hauptspaltreaktor auf, von denen zumindest einer austrittseitig mit der Gasturbine verbunden ist, so dass im Vor- und/oder im Hauptspaltreaktor erhältliches Spaltgas über die Brennstoffzuführung der Gasturbine zugeführt werden kann.

Zur Erzeugung der für die Ammoniakspaltung benötigten Wärme kann die Spalteinrichtung mit einem oder mehreren Brennern ausgeführt sein und/oder eine elektrischer Heizeinrichtung aufweisen. Falls die Spalteinrichtung einen Vor- und einen seriell dazu angeordneten Hauptspaltreaktor umfasst, ist vorzugsweise zumindest der Hauptspaltreaktor mit einer elektrischen Heizeinrichtung ausgeführt.

Die stromabwärts der Spalteinrichtung angeordnete Trenneinrichtung umfasst vorzugsweise einen Druckwechseladsorber, mit dem Stickstoff, Ammoniak und ggf. Wasser aus dem beispielsweise durch Abkühlung zu einem Einsatzgas aufbereiteten Spaltgas abgetrennt werden können, um das Wasserstoffprodukt sowie ein Wasserstoff, Stickstoff, Ammoniak und ggf. Wasser enthaltendes Restgas zu erhalten. Der Druckwechseladsorber kann mit der Spalteinrichtung verbunden sein, so dass zumindest ein Teil des Restgases zurückgeführt werden kann, um zur Bereitstellung von Wärme für die Ammoniakspaltung verbrannt zu werden.

Sinnvollerweise ist die Gasturbine austrittseitig mit der Spalteinrichtung verbunden, so dass die Wärme des Gasturbinenabgases zur Verdampfung und/oder Überhitzung des in der Spalteinrichtung eingesetzten Ammoniaks nutzbar ist.

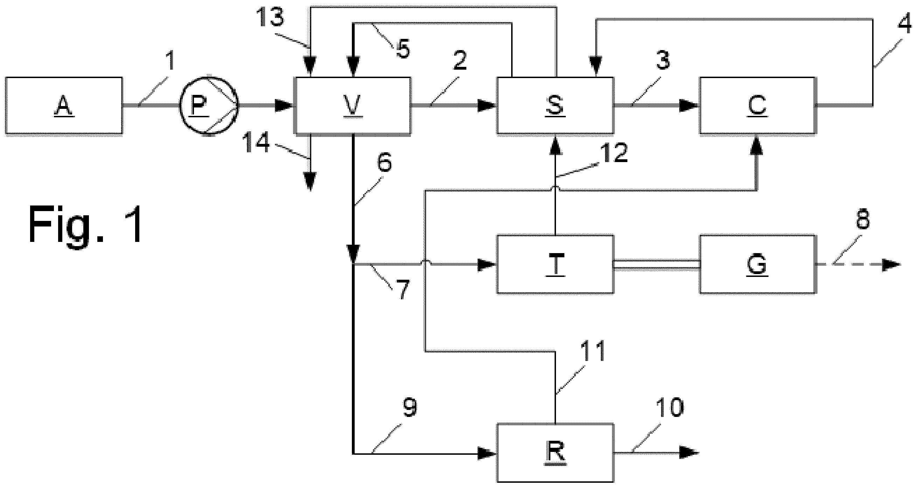

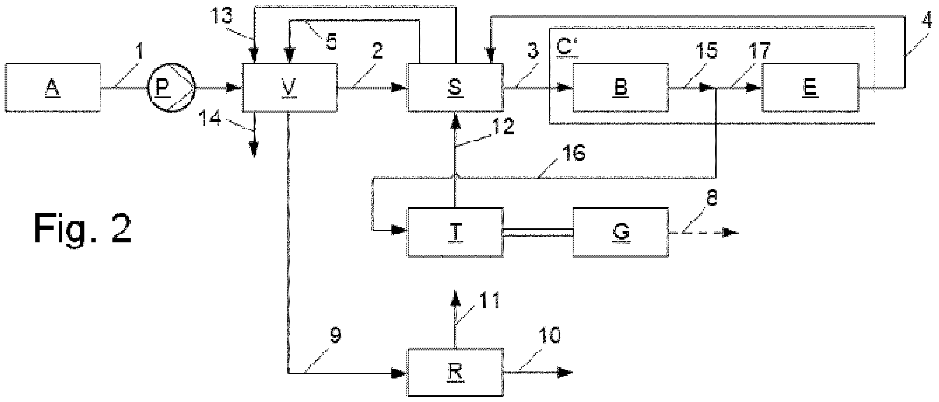

Im Folgenden soll die Erfindung anhand zweier in den Figuren 1 und 2 schematisch dargestellter Ausführungsbeispiele näher erläutert werden. In den beiden Figuren sind gleiche Anlagenteile und Stoffströme mit gleichen Bezugszeichen markiert.

Die Figur 1 zeigt eine bevorzugte Variante der Erfindung mit genau einem Spaltreaktor, während die Figur 2 ein andere Variante der Erfindung mit einem Vor- und einem Hauptspaltreaktor zeigt.

Aus dem Tank A wird technisches Ammoniak 1 mit Hilfe der Pumpe P flüssig entnommen und mit einem Druck zwischen 10 und 50 bar dem Verdampfer V zugeführt, um Ammoniaksattdampf 2 zu erhalten, der im Überhitzer S bis auf ca. 550°C aufgeheizt, ehe er über Leitung 3 in die aus einem brennerbefeuerten Spaltreaktor bestehende Spalteinrichtung C geleitet wird. Unter weiterer Zufuhr von Wärme und mit katalytischer Unterstützung wird das als überhitzter Dampf 3 vorliegende Ammoniak in der Spalteinrichtung C gespalten, wobei ein weitgehend aus Wasserstoff und Stickstoff bestehendes, nicht umgesetztes Ammoniak sowie Wasser enthaltendes Spaltgas 4 entsteht, das die Spalteinrichtung C mit einer Temperatur von bis zu ca. 900°C verlässt. Im Überhitzter S wird das heiße Spaltgas 4 gegen den zu überhitzenden Ammoniaksattdampf 2 abgekühlt, wobei ein auf eine erste Temperatur abgekühltes Spaltgas 5 erhalten wird, das im Verdampfer V gegen den zu verdampfenden Ammoniakeinsatz 1 weiter auf eine zweite Temperatur abgekühlt wird, die den Einsatz des Spaltgases 6 als Brennstoff in der Gasturbine T erlaubt.

Im Bedarfsfall wird zumindest ein Teil 7 des abgekühlten Spaltgases 6 in der Gasturbine T verbrannt, die über den mit ihr gekoppelten Generator G elektrischen Strom 8 erzeugt, der einem Stromnetz (nicht dargestellt) als Regelenergie zugeführt wird. Der nicht für den Einsatz in der Gasturbine T benötigte Teil 9 des abgekühlten Spaltgases 6 wird - nach einer evtl. erforderlichen weiteren Abkühlung - der Trenneinrichtung R zugeführt, in der sie beispielsweise durch Druckwechseladsorption in ein Wasserstoffprodukt 10 und ein Restgas 11 getrennt wird, das neben Stickstoff und Wasser auch Wasserstoff und Ammoniak enthält. Während das Wasserstoffprodukt 10 gegen Gutschrift abgegeben wird, wird das Restgas 11 in den ähnlich wie ein Dampfreformer aufgebauten Spaltreaktor C zurückgeführt und zur Bereitstellung von Wärme für die Ammoniakspaltung verbrannt. Kohlendioxidfreies Abgas 12, das die Gasturbine T mit einer Temperatur von bis zu ca. 500°C verlässt, wird im Überhitzer S gegen den zu überhitzenden Ammoniakdampf 3 abgekühlt, wobei ein auf eine erste Temperatur abgekühltes Abgas 13 erhalten wird, das nach einer weiteren Abkühlung im Verdampfer V gegen den zu verdampfenden Ammoniakeinsatz 1 über Leitung 14 in die Atmosphäre freigesetzt wird.

Im Ausführungsbeispiel der Figur 2 wird der überhitzte Ammoniakdampf 3 in eine Spalteinrichtung C' weitergeführt, die einen adiabat betriebenen Vorspaltreaktor B und einen elektrisch beheizten Hauptspaltreaktor E aufweist. Im Vorspaltreaktor B wird ein Teil des im Ammoniakdampf 3 enthaltenen Ammoniaks mit katalytischer Unterstützung und unter Nutzung von fühlbarer Wärme in Wasserstoff und Stickstoff gespalten, wobei das Vorspaltgas 15 entsteht, dessen Zusammensetzung und Temperatur seinen Einsatz als Brennstoff in der Gasturbine T erlauben.

Im Bedarfsfall wird zumindest ein Teil 16 des Vorspaltgases 15 in der Gasturbine T verbrannt, die über den mit ihr gekoppelten Generator G elektrischen Strom 8 erzeugt, der einem Stromnetz (nicht dargestellt) als Regelenergie zugeführt wird. Der nicht für den Einsatz in der Gasturbine T benötigte Teil 17 des Vorspaltgases 15 wird weiter in den Hauptspaltreaktor E geführt, wo der überwiegende Teil des enthaltenen Ammoniaks unter Wärmezufuhr und mit katalytischer Unterstützung in Wasserstoff und Stickstoff gespalten wird, wobei ein weitgehend aus Wasserstoff und Stickstoff bestehendes, nicht umgesetztes Ammoniak sowie Wasser enthaltenden Vollspaltgas 4 entsteht, das die Spalteinrichtung C' mit einer Temperatur von bis zu ca. 900°C verlässt. Im Überhitzter S wird das heiße Vollspaltgas 4 gegen den zu überhitzenden Ammoniaksattdampf 2 abgekühlt, wobei ein auf eine erste Temperatur abgekühltes Vollspaltgas 5 erhalten wird, das im Verdampfer V gegen den zu verdampfenden Ammoniakeinsatz 1 weiter auf eine zweite Temperatur abgekühlt und anschließend über Leitung 9 der Trenneinrichtung R zugeführt wird, in der es beispielsweise durch Druckwechseladsorption in ein Wasserstoffprodukt 10 und ein Restgas 11 getrennt wird, das neben Stickstoff und Wasser auch Wasserstoff und Ammoniak enthält. Während das Wasserstoffprodukt 10 gegen Gutschrift abgegeben wird, wird das Restgas 11 einem externen Verbraucher oder einer Fackel zugeführt (beides nicht dargestellt).

## Patentansprüche

1. Verfahren zur Erzeugung elektrischer Regelenergie (8) für ein Stromnetz, wobei ein Brennstoff (7, 16) in einer Gasturbine (T) verbrannt wird, die einen mit dem Stromnetz verbundenen elektrischen Generator (G) antreibt, der die Regelenergie (8) bereitstellt, **dadurch gekennzeichnet, dass** Ammoniak (1) mit katalytischer Unterstützung thermisch gespalten wird, um ein Wasserstoff und Stickstoff umfassendes Spaltgas (4, 15) zu gewinnen, von dem zumindest ein Teil (7, 16) im Bedarfsfall der Gasturbine (T) als Brennstoff zugeführt wird, wobei zum Betrieb der Gasturbine (T) nicht benötigtes Spaltgas (9, 17) weiter zu einem Wasserstoffprodukt (10) aufbereitet wird.

2. Verfahren nach Anspruch 1, **dadurch gekennzeichnet, dass** die Ammoniakspaltung in einem einzigen Spaltschritt (C) durchgeführt und zumindest ein Teil (7) des dabei erhaltenen Spaltgases (4) der Gasturbine (T) als Brennstoff zugeführt wird.

3. Verfahren nach Anspruch 1, **dadurch gekennzeichnet, dass** die Ammoniakspaltung in einem Vor- (B) und einem Hauptspaltschritt (E) durchgeführt wird, wobei zumindest ein Teil (16) des im Vorspaltschritt (B) erhaltenen Spaltgases (15) der Gasturbine (T) als Brennstoff zugeführt wird.

4. Verfahren nach Anspruch 3, **dadurch gekennzeichnet, dass** zumindest ein Teil des im Hauptspaltschritt (E) erhaltenen Spaltgases (4) der Gasturbine (T) als Brennstoff zugeführt wird.

5. Verfahren nach einem der Ansprüche 1 bis 4, **dadurch gekennzeichnet, dass** das Spaltgas (7, 16) der Gasturbine (T) ohne aktive Druckreduzierung als Brennstoff zugeführt wird.

6. Verfahren nach einem der Ansprüche 1 bis 5, **dadurch gekennzeichnet, dass** nicht zum Betrieb der Gasturbine (T) benötigtes Spaltgas (9, 17) durch den Hauptspaltschritt (E) und/oder die Abtrennung von Stickstoff, Ammoniak und ggf. Wasser (R) zu einem Wasserstoffprodukt (10) aufbereitet wird.

7. Verfahren nach einem der Ansprüche 1 bis 6, **dadurch gekennzeichnet, dass** der nicht zum Betrieb der Gasturbine (T) benötigte Teil des Spaltgases (9) durch Druckwechseladsorption unter Bildung eines Restgases (11) aufbereitet wird, von dem zumindest ein Teil zur Bereitstellung von Wärme für die Ammoniakspaltung verbrannt wird.

8. Verfahren nach einem der Ansprüche 1 bis 7, **dadurch gekennzeichnet, dass** für die Ammoniakspaltung benötigte Wärme elektrisch erzeugt wird.

9. Verfahren nach einem der Ansprüche 1 bis 8, **dadurch gekennzeichnet, dass** die Wärme von in der Gasturbine (T) anfallendem Abgas zur Verdampfung (V) und/oder Überhitzung (S) des zur Spaltung eingesetzten Ammoniaks (1) genutzt wird.

10. Vorrichtung zur Erzeugung elektrischer Regelenergie (8) für ein Stromnetz, mit einer Gasturbine (T), die mit einem Generator (G) gekoppelt und über diesen mit dem Stromnetz verbunden ist, sowie einer Brennstoffzuführung, über die der Gasturbine (T) ein für ihren Betrieb benötigter Brennstoff (7, 16) zugeführt werden kann, **dadurch gekennzeichnet, dass** sie eine mit der Gasturbine (T) sowie einer Trenneinrichtung (R) verbundene Spalteirichtung (C, C') aufweist, in der Ammoniak (1) mit katalytischer Unterstützung thermisch gespalten werden kann, um ein Wasserstoff und Stickstoff umfassendes Spaltgas (4, 15) zu gewinnen, von dem zumindest ein Teil (7, 16) im Bedarfsfall der Gasturbine (T) über die Brennstoffzuführung (7, 16) als Brennstoff zuführbar ist, während zum Betrieb der Gasturbine (T) nicht benötigtes Spaltgas (9, 16) zu einem Einsatzgas aufbereitet werden kann, von dem in der Trenneinrichtung (R) ein Wasserstoffprodukt (10) abtrennbar ist.

11. Vorrichtung nach Anspruch 10, **dadurch gekennzeichnet, dass** die Spalteinrichtung (C) genau einen Spaltreaktor aufweist, der austrittseitig über die Brennstoffzuführung mit der Gasturbine (T) verbunden ist, so dass im Spaltreaktor (C) erhältliches Spaltgas (4) über die Brennstoffzuführung der Gasturbine (T) als Brennstoff (7) zugeführt werden kann.

12. Vorrichtung nach Anspruch 10, **dadurch gekennzeichnet, dass** die Spalteinrichtung (C') einen Vor- (B) und einen diesem nachgeschalteten Hauptspaltreaktor (E) umfasst, von denen zumindest einer austrittseitig mit der Gasturbine (T) verbunden ist, so dass im Vor- (B) und/oder im Hauptspaltreaktor (E) erhältliches Spaltgas (15) über die Brennstoffzuführung der Gasturbine (T) als Brennstoff zugeführt (16) werden kann.

13. Vorrichtung nach einem der Ansprüche 10 bis 12, **dadurch gekennzeichnet, dass** die stromabwärts der Spalteinrichtung (C, C') angeordnete Trenneinrichtung (R) einen Druckwechseladsorber aufweist, mit dem Stickstoff, Ammoniak und ggf. Wasser aus einem aus Spaltgas erhältlichen Einsatzgas (9) abgetrennt werden können, um das Wasserstoffprodukt (10) sowie ein Wasserstoff, Stickstoff, Ammoniak und ggf. Wasser enthaltendes Restgas (11) zu erhalten.

14. Vorrichtung nach einem der Ansprüche 10 bis 13, **dadurch gekennzeichnet, dass** die Spalteinrichtung (C, C') über eine elektrisch Heizeinrichtung beheizbar ist.

15. Vorrichtung nach einem der Ansprüche 10 bis 14, **dadurch gekennzeichnet, dass** die Gasturbine (T) austrittseitig mit einer Einrichtung zur Verdampfung (V) und/oder Überhitzung (S) des in der Spalteinrichtung (C, C') einsetzbaren Ammoniaks (1) verbunden ist, so dass Wärme von in der Gasturbine anfallendem Abgas (12) zur Verdampfung und/oder Überhitzung des in der Spalteinrichtung (C, C') einsetzbaren Ammoniaks (1) nutzbar ist.
